# EUROPEAN PATENT APPLICATION

(11) **EP 1 976 178 A1**
(43) Date of publication of application: **01.10.2008**
(21) Application number: 07450064.6
(22) Date of filing: 30.03.2007
(51) Int. Cl.: H04L 9/18

(54) **Deciphering data frames on the Gb interface of a GPRS network**

(71) Applicant: Kapsch Carriercom AG, 1120 Wien (AT)
(72) Inventor: Hasenleithner, Eduard, 5061 Elsbethen (AT); Pilz, René, 1220 Wien (AT)
(74) Representative: Weiser, Andreas

(57) **Abstract**

A method of deciphering Gb data frames in a GPRS network comprises:
capturing ciphering key lists on Gr and Gn interfaces and storing them in a roll-over list;
marking the current ciphering keys in the roll-over list when a key refreshes are captured;
capturing ciphering input offset values on the Gb interface and storing them;
logging frame number overflows on the Gb interface; and
for each frame the steps of:
a) extracting the frame number and service identifier from the frame and retrieving the stored roll-over list, current ciphering key, ciphering input offset value and overflow counter value;
b) deciphering the frame on the basis of the extracted and retrieved parameters and checking the checksum of the deciphered frame;
c) if the checksum is not correct: repeating step b) in a loop while altering the overflow counter value until a correct checksum is detected;
d) if the loop in step c) ends without a correct checksum detected: repeating step b) in a loop while successively using ciphering keys from the roll-over list until a correct checksum is detected.

## Description

The present invention relates to a method of deciphering data frames captured on the Gb interface between a mobile station and a serving GPRS support node in a mobile network according to the GPRS standard, the frames being attributable to a mobile station identifier and including an unciphered frame number, an unciphered service identifier, ciphered data and a checksum.

For an explanation of the general GPRS network structure reference is made to ETSI specification TS 123 060, "Digital cellular telecommunications system (Phase 2+); Universal Mobile Telecommunications System (UMTS); General Packet Radio Service (GPRS); Service description; Stage 2"; the basic mechanism of the Gb LLC ciphering procedure is defined in ETSI specification TS 144 064, "Digital cellular telecommunications system (Phase 2+); Mobile Station - Serving GPRS Support Node (MS-SGSN); Logical Link Control (LLC) Layer Specification", Annex A.

Deciphering LLC data frames on the Gb interface of a GPRS system is an important and critical task in network analyzers which rely on an analysis of the system traffic with fine granularity of up to end-to-end communications, i.e. up to individual mobile stations. The deciphering process requires an accurate tracking of numerous system messages over different system interfaces, including the Gr and Gn interfaces of the GPRS network, in order to be able to decipher each individual frame correctly.

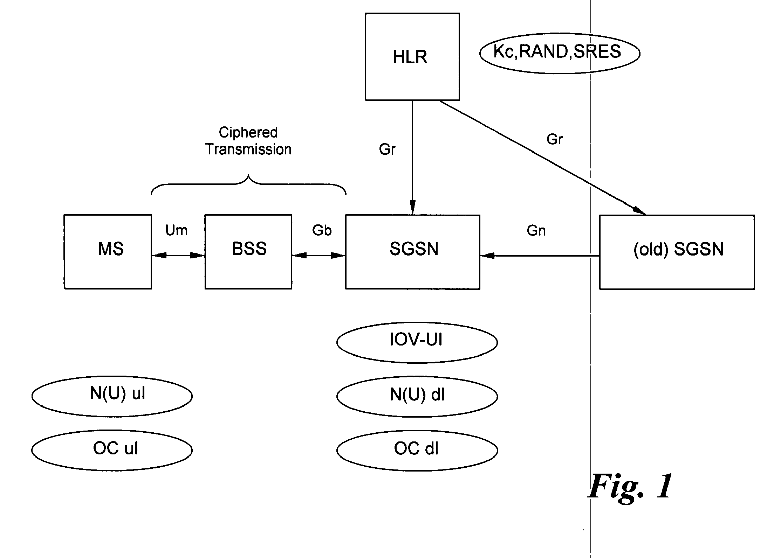

Fig. 1 shows the devices involved in the Gb LLC ciphering process comprising a mobile station (MS), usually a mobile phone, a serving GPRS support node (SGSN) which is responsible for forwarding data packets to the correct MS, and the home location register (HLR) which is responsible for generating secret ciphering keys. Only data frames (packets) going from the SGSN to the MS (via the base station subsystem BSS) or frames going from the MS to the SGSN are ciphered.

Ciphered frames are thus transmitted over the Gb interface which connects the BSS and the SGSN, and over the Um interface consisting of airwaves which connect the MS and the BSS. The ciphering of these frames is an essential security feature of GPRS networks since the airwaves can easily be received by anyone with a suitable receiver.

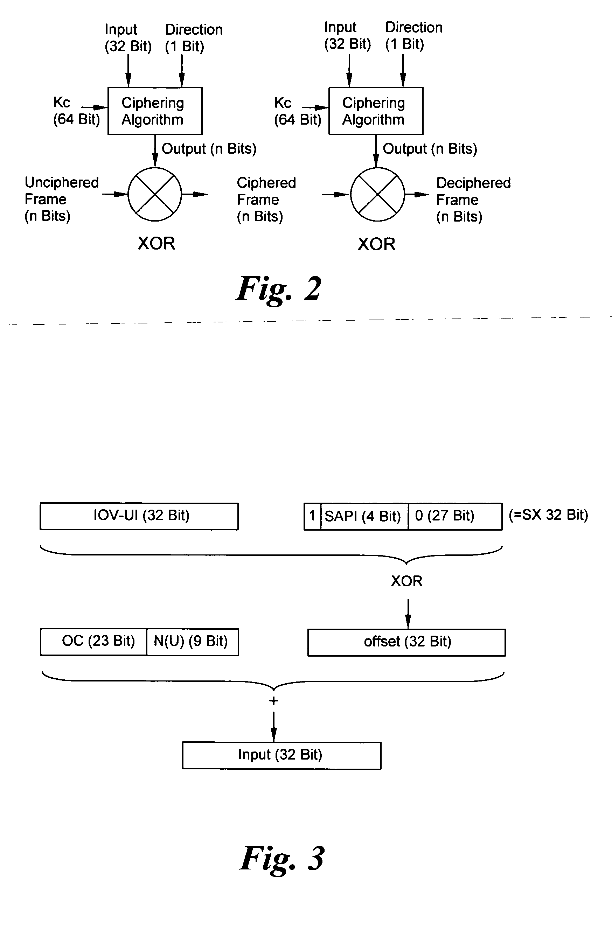

The basic LLC ciphering process used on the Gb interface is shown in Fig 2. The ciphering process consists of a sender which ciphers a data frame and of a receiver which deciphers a data frame. In data frames transmitted from the SGSN to the MS the SGSN is the sender and the MS is the receiver. This transmission direction is called downlink direction (abbreviated dl). In the reverse case the MS is the sender and the SGSN is the receiver and this is called uplink direction (ul). Sender and receiver need the same set of ciphering parameters in order to correctly transfer a ciphered frame.

A frame is a data block consisting of 1 octet (8 bit) up to 1600 octets (12800 bit). The ciphering parameters are:
- Kc, which is the secret ciphering key
- input, which is basically a unique frame number, and
- direction, which is 0 or 1 depending on the transfer direction.
For deciphering frames captured on the Gb interface this translates to the requirement of knowing the three parameters Kc, input and direction for each frame transmitted over the Gb interface.

In fact, since there may be more than one standard GPRS encryption algorithms, a correct application of the ciphering key Kc may require the additional indication for which algorithm it is intended. This indication is given by the so-called GPRS encryption algorithm (GEA) number. Therefore, whenever the term "ciphering key" is used in the present application, it is meant to also comprise the respective GEA, if necessary.

Obtaining the direction bit for a frame is the most simple part since this bit is signalled directly with each transmitted frame on the Gb interface.

The first step in acquiring the Kc is intercepting messages to the SGSN which contain the Kc value. As shown in Fig. 1 the Kc is generated in the HLR. For generating the Kc the HLR generates a 128 bit random number called RAND. Using this RAND and a secret function known to the HLR and the MS the Kc (64 bit) is calculated. Since the RAND value is transmitted in clear text over the Gb interface to the MS the MS can also derive the Kc value.

Apart from Kc the HLR also calculates - using a different secret function known to the HLR and the MS - a 32 bit value called SRES. This value is used for authentication of the MS to the SGSN.

After being generated by the HLR the three values Kc, RAND and SRES, also called a triplet, are sent to the SGSN to which the MS is currently attached to.

Security measures dictate that the Kc should be changed in regular intervals (or in certain cases not named here) in order to make it harder for an eavesdropper to derive the Kc by means of observing the communication over Um. In order to reduce the load imposed on the HLR, the HLR does not generate a single triplet but a list of triplets at a time and sends them in a single message (called SEND_AUTHENTICATION_INFO, see ETSI specification TS 129 002, "Digital cellular telecommunications system (Phase 2+); Universal Mobile Telecommunications System (UMTS); Mobile Application Part (MAP) specification", section 8.5.2) over the Gr interface to the SGSN. The SGSN remembers the unused triplets in an internal list.

For each Kc refresh interval the SGSN takes one triplet from this list, remembers the Kc of this triplet and sends the RAND of this triplet to the MS by means of the authentication and ciphering request message (ETSI specification TS 124 008, "Digital cellular telecommunications system (Phase 2+); Universal Mobile Telecommunications System (UMTS); Mobile radio interface Layer 3 specification; Core network protocols; Stage 3", section 9.4.9). Additionally to the RAND the GPRS encryption algorithm number (GEA) is signalled in this request. After receiving the RAND value the MS calculates the SRES and sends it back to the SGSN by means of the authentication and ciphering response message (TS 124 008, Section 9.4.10). The SGSN compares the SRES values with the SRES value of the triplet. If it is equal the Kc is marked as the current ciphering key (current Kc) and used for all subsequent ciphered communication.

Due to the mobility requirements in a GPRS network a MS can change its current SGSN. This means that the current Kc has to be transferred from the "old" SGSN to the "new" SGSN in case of an SGSN change. Again, in order to reduce the load to the HLR also the unused triplets are transferred from the old SGSN to the new SGSN. This is done by means of the "SGSN context response" message (see ETSI specification TS 129 060, "Digital cellular telecommunications system (Phase 2+); Universal Mobile Telecommunications System (UMTS); General Packet Radio Service (GPRS); GPRS Tunnelling Protocol (GTP) across the Gn and Gp interface", section 7.5.4) over the Gn interface.

Since it is possible to directly (via the Gr interface) and indirectly (via the Gn interface) transfer the Kc to the SGSN the messages of both interfaces have to be captured in order to obtain the Kc needed for Gb LLC deciphering.

Coming back to the ciphering procedure described in Fig. 2 the input parameter has not been described yet. The basic computation of the input parameter is performed according to Fig. 3. This computation has itself four parameters:
- N(U), which is the frame number modulo 512 (9 bit),
- OC, which is an overflow counter (23 bit),
- SAPI (service access point identifier) (4 bit), and
- IOV-UI, (input offset value for unacknowledged information frames), an input offset value (32 bit).
An "exclusive-or" (XOR) operation is performed with the IOV-UI and the SAPI mask and the result is added with the OC and the N(U) in order to obtain the input parameter for the ciphering/deciphering process of Fig. 2.

It should be added that the above parameters apply to the unacknowledged information transmission mode (UI-mode); in case of the acknowledged information transmission mode (I-mode) instead of N(U) the frame number N(S) is used; and instead of IOV-UI the offset value IOV-I (input offset value for acknowledged information frames) is used which is - without having been XOR-ed with the SAPI mask - directly fed into the ADD operation. Therefore, although for simplicity reasons the examples detailed herein refer primarily to the UI-mode parameters, it is clear that whenever the terms "frame number", "input offset value", N(U) and IOV-UI are used in the present application, they are intended to cover both, UI- and I-mode parameters, i.e. to cover the respective I-mode parameters as well.

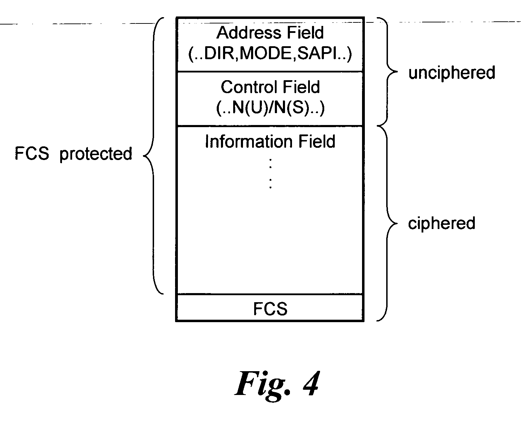

The origin of the individual parameters is shown schematically in Fig. 1 by their position in ellipses under the respective entities and in Fig. 4 which is a schematic representation of a data frame on the Gb interface according to ETSI specification TS 144 064, section 5.1. As can easily be seen, the origin is as follows:
- Kc, RAND and SRES are generated by the HLR and can be captured on the Gr and Gn interfaces.
- The N(U) value is contained in unciphered form in each frame on the Gb interface. N(U) is incremented by one for each consecutive frame sent by the sender. Every time N(U) rolls over from 511 to 0 the OC is incremented by one. The OC itself is not contained in the message but has to be computed indirectly by counting the overflows from 511 to 0 in the receiver. Along with the N(U) the SAPI is also contained in unciphered form in every Gb LLC data frame. OC and the N(U) restart from zero after an SGSN change.
- The IOV-UI is usually signalled from the SGSN to the MS if the MS contacts the SGSN after a SGSN change. The value is signalled in clear text in a so-called XID frame (see ETSI TS 144 064, Section 6.4.1.6) on the Gb interface.
Considering this, a deciphering system has to cope with following problems:
- The deciphering system has to collect data from three different kinds of interfaces, Gr, Gn and Gb.
- The data from these three interfaces has to be collected in a central node where the deciphering can occur.
- The identifiers have to arrive at the deciphering node in a timely manner; otherwise the deciphering will fail until the delivery of these identifiers.
- A list of triplets (Kc, RAND and SRES) has to be remembered by the deciphering node in order to know the next Kc used after a Kc negotiation (handshake, refresh).
- The currently used OC has to be remembered and followed since it is not explicitly signalled either.
- The Gb interface of a single SGSN usually consists of a bundle of individual physical wires or fibres which have all to be captured. Sometimes it is not possible to capture all of them so a few are missing. This means that a certain percentage of signalling is missed and OC and/or Kc changes happen unnoticed.
- Experience shows that the resulting Kc of some signalling procedure between an SGSN and an MS is not always clear, i.e. can be ambiguous.
The deciphering methods known hitherto cope poorly with these numerous and varying demands. In fact, all currently available GPRS network analyzers which employ one of the known methods achieve in the practical application a disappointingly low deciphering rate of only 60-70% of all frames on the Gb interface, which is unacceptably low for complex analysis tasks of fine granularity, e.g. reliable large scale statistical analysis of individual end-to-end communications.

It is therefore an object of the invention to provide a method for deciphering Gb LLC data frames in a GPRS network with significantly improved reliability and deciphering rate.

The object of the invention is achieved by means of method of the above-mentioned kind, which method comprises the steps of:
continuously capturing ciphering key lists sent to said serving GPRS support node over Gr and Gn interfaces of the network and storing them in a roll-over list per mobile station identifier;
continuously marking the next ciphering key in the roll-over list of a mobile station as current when a key refresh message is captured on the Gb interface;
continuously capturing ciphering input offset values on the Gb interface and storing them per mobile station identifier and service identifier if applicable;
continuously logging frame number overflows in subsequent frames of a mobile station in an overflow counter value per mobile station identifier and service identifier; and
for each frame captured on the Gb interface and attributable to a mobile station identifier performing the steps of:
   a) extracting the frame number and service identifier from the frame and retrieving the stored roll-over list, current ciphering key, ciphering input offset value and overflow counter value for said mobile station identifier and service identifier;
   b) deciphering the frame on the basis of the retrieved current ciphering key, ciphering input offset value and overflow counter value and the extracted frame number and service identifier and checking the checksum of the deciphered frame and, if correct, outputting the deciphered frame;
   c) if the checksum in step b) is not correct: repeating step b) in a loop of predetermined length while altering the overflow counter value used until a correct checksum is detected, in which case the successful overflow counter value is stored and the deciphered frame is output;
   d) if the loop in step c) ends without a correct checksum detected: repeating step b) in a loop of predetermined length while successively using ciphering keys from the roll-over list until a correct checksum is detected, in which case the successful ciphering key is marked as current and the deciphered frame is output.

The method of the invention captures, collects and remembers all necessary deciphering parameters from all interfaces involved and provides a fast and efficient mechanism to cope with missed-out transmissions and ambiguous signalling. In this way an impressive high percentage of all data frames on the Gb interface can be successfully deciphered. In fact, field test have shown that the inventive method yields a reliable deciphering rate of better than 99%. This is significantly more than with any other method of the state of the art.

A particularly preferred embodiment of the invention is characterized in that if the loop of step d) ends without a correct checksum detected, steps c) and d) are skipped in the deciphering of a predetermined number of subsequent frames of the same mobile station identifier. By this means the processing load for the deciphering processor can be limited in order to avoid an overload if severe deciphering problems are encountered.

This advantageous feature is based on the insight that if a frame cannot be deciphered even after steps c) and d) have been completed, it is probable that some other essential signalling has been missed in the recent captures so that the deciphering of the next frames of the same mobile station is also very likely to fail until all relevant signalling has been updated again. The proposed suspending of steps c) and d) avoids in such a case an unnecessary consumption of processing time, which on a large statistical scale reduces the average processing load for the deciphering processor. In effect conventional hardware, e.g. currently available personal computers, can be used for all capturing and deciphering tasks without compromising the throughput and accuracy of the process.

According to a further preferred feature of the invention in the loop of step c) the overflow counter value is decremented by one for the first run of the loop and successively incremented, starting from its original value, by one for all subsequent runs of the loop. This small "step back", before the overflow counter is incremented, can take into account possible buffering/reordering effects on the Gb interface and thus further increases the deciphering rate obtained with the method of the invention.

Preferably the length of the loop of step c) is 8 to 16 and the length of the loop of step d) is equal to the length of the roll-over list. This has been found to be a good compromise in maximizing the deciphering rate up to >99% while minimizing the processing power necessary therefor.

A further aspect of the invention deals with the application of the method of the invention in a GPRS network analyzer.

A still further aspect of the invention is a GPRS network analyzer which implements the method of the invention.

The invention will now be described in detail with reference to a preferred and exemplary embodiment thereof and the enclosed drawings in which
Fig. 1 (state of the art) shows the devices of a GPRS network involved in the LLC ciphering process on the Gb interface in block diagram form;
Fig. 2 (state of the art) shows the LLC ciphering function in block diagram form;
Fig. 3 (state of the art) shows the computation of the input parameter of the LLC ciphering function of Fig. 2 in block diagram form;
Fig. 4 (state of the art) shows the layout of an LLC data frame on the Gb interface;
Fig. 5 shows the deciphering part of a network analyzer incorporating the method of the invention in a block diagram form;
Fig. 6 shows the interfaces of Fig. 5 in detail and the parameters captured thereon in schematic form; and
Fig. 7 shows the method of the invention in flow chart form.

As concerns Figs. 1 to 4 and the Gb LLC ciphering process depicted therein, reference is made to the introductory part of the specification where this has been explained in detail.

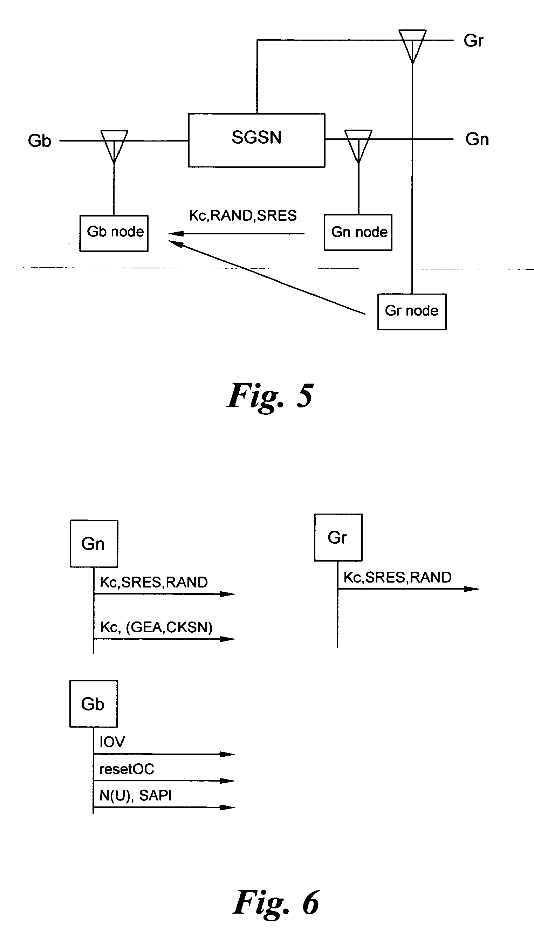

Fig. 5 shows the basic structure of the deciphering system with a single SGSN. All relevant interfaces, Gb, Gr and Gn, are tapped and fed to respective capture nodes, called Gb node, Gr node and Gn node. The Gr node parses the MAP (ETSI TS 129.002) traffic on the Gr interface and sends the authentication triplets to the Gb node. The Gn node parses the GTP (ETSI 129.060) traffic and sends the authentication triplets as well as the current Kc to the Gb node. This information passing is done immediately after a message with a new Kc has been observed on Gn or Gr.

In the scenario depicted the deciphering process is performed in the Gb node. As mentioned, the Gb node gets the authentication triplets and current Kc unsolicited from the Gn and Gr nodes. Every time a new authentication triplet and/or current Kc arrives the Gb node stores this information in an internal database in a data structure the layout of which is explained later on. The Gb node itself captures the traffic from the Gb interface and stores information from this interface also in this data structure. Fig. 6 summarizes the information collected on the individual interfaces.

All previous explanations where basically implying that a single mobile station (MS) is handled by the system. In practice the system has to handle several thousands of mobile stations MS in a single Gb node. The mobile stations MS can be distinguished by means of the international mobile subscriber identifier (IMSI). The IMSI is directly and/or indirectly (e.g. as temporary logical link identifier, TLLI) signalled on the Gb, Gr and Gn interface. The Gb node stores the authentication triplets and other ciphering relevant parameters per IMSI in the data structure. The data structure belonging to one IMSI thus contains:
- The IMSI itself for the lookup.
- A roll-over list of ciphering triplets {Kc (including GEA), RAND, SRES}, e.g. 20 triplets.
- The current Kc (including GEA), optionally with ciphering key sequence number CKSN. The current IOV-UI (1 value) and IOV-I (the latter per ul/dl direction and per SAPI, i.e. 2 x 16 values).
- The OCs per direction DIR (ul/dl), per MODE (UI/I), and per SAPI (2 x 2 x 16 values).
- The last seen N(U) per ul/dl direction and per SAPI (2 x 16 values), and the last seen N(S) per ul/dl direction and per SAPI (further 2 x 16 values).
- A frame skip counter r (described later).
For each authentication triplet {Kc, RAND, SRES} supplied from the Gn or Gr node the Gb node searches for the oldest entry in the roll-over list and overwrites it with the new triplet ("roll-over").

There are two cases when the current Kc is updated:
- A new current Kc was supplied by means of an "SGSN context response" on the Gn interface and forwarded by the Gn node to the Gb node;
- The Gb node notices that the SGSN requested a Kc renegotiation and the MS responded with an SRES value. The roll-over list (authentication triplet list) is searched for this SRES value and if found the current Kc is updated to the found Kc.
The OCs for all SAPIs are reset to zero if an LLC XID frame with the reset parameter is captured on the Gb interface by the Gb node.

After all this preliminary work of collecting the values needed for the Gb LLC frame deciphering the Gb node is able to decipher Gb LLC frames.

When a new LLC frame is captured on the Gb interface it is first attributed to the correct mobile station identifier IMSI. The correlation between the frame of the Gb interface and its IMSI is not part of the logical link control (LLC) layer to which the ciphered LLC data frame belongs to but is part of a higher protocol layer not relevant for the present deciphering process. For details of how to attribute an LLC data frame on the Gb interface to the IMSI of the mobile station the LLC communication pertains to, reference is made to ETSI specification TS 148 018, "Digital cellular telecommunications system (Phase 2+); General Packet Radio Service (GPRS); Base Station System (BSS) - Serving GPRS Support Node (SGSN); BSS GPRS protocol (BSSGP)".

For the purposes of the description of the present invention it is sufficient to start with the point where this correlation has already been made, i.e. each LLC data frame captured on the Gb interface has been attributed to an IMSI.

Under this assumption and with reference to Fig. 4 each LLC data frame captured on the Gb interface gives the following parameters:
- IMSI (attributed to the frame in a prior processing step not pertaining to the LLC deciphering),
- DIR, the frame direction,
- MODE, the mode (UI/I),
- SAPI, a traffic identifier for different semantics and quality of service (QoS) classes, and
- N(U) (or N(S)), the current frame number modulo 512.
(The frame check sequence FCS, a CRC of the payload, is contained in the ciphered part of the frame and is accessible after having deciphered the frame).

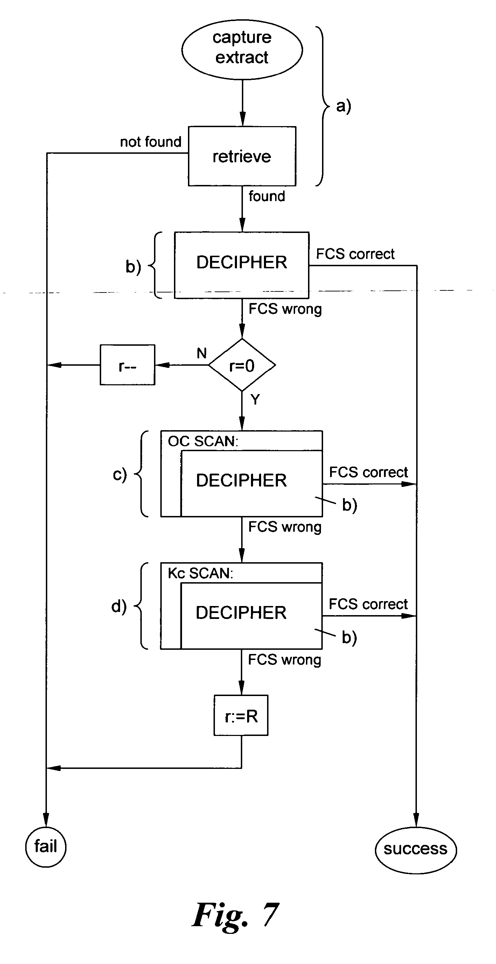

Starting from this point, the deciphering method will now be explained in detail with reference to Fig. 7.

In a first step a) the frame number N(U)/N(S), service identifier SAPI, mode MODE and direction DIR are extracted from the captured frame. Using the IMSI attributed in the prior correlation step, the Gb node also retrieves the stored ciphering parameters from the data structure detailed above, i.e.
- roll-over list with ciphering keys Kc,
- current Kc (optionally CKSN, GEA),
- input offset value IOV-UI, or IOV-I per DIR and SAPI,
- overflow counter value OC per MODE, DIR and SAPI,
- the last N(U)/N(S) per MODE, DIR and SAPI, and
- a frame skip counter r (described later).
The N(U)/N(S) of the current frame is compared with the last N(U)/N(S) from the data structure: If there was a wrap from 511 to 0 the corresponding OC is incremented. The process cares for cases where there is a wrap with a bigger difference than one, maybe from 509 to 3. This means that some frames were lost but the OC has to be incremented also in this case. After the computation of the new OC the new N(U)/N(S) is stored in the data structure.

If in step a) a data structure with a matching IMSI could not be found in the database of the Gb node, the deciphering method fails and the frame is not deciphered. Otherwise the process proceeds to step b).

In step b) the frame (Fig. 4) is deciphered on the basis of the retrieved current ciphering key Kc, ciphering input offset value IOV-UI/IOV-I and overflow counter value OC as well as on the basis of the extracted frame number N(U)/N(S) and service identifier SAPI using the standard deciphering algorithm shown in Figs. 2 and 3. After deciphering the FCS of the deciphered frame is computed and compared with the FCS signalled in the frame. If it is equal the deciphering was successful and the deciphered frame is output and ready for further processing by subsequent analysis modules not shown herein. Also, in the event of success the frame skip counter r is set to zero at the end of step b).

If the frame could not be correctly deciphered, the process goes on to step c). However, before entering step c) a test is made if the frame skip counter r is zero. If not, this indicates that the process is in the state of skipping the detailed analysis of frames in the steps c) and d) for a number of frames, and hence the frame skip counter r is decremented by one (block "r--") and the deciphering method fails, i.e. the data frame is not deciphered.

If, on the other hand, the test r=0 is true, step c) is entered.

In step c) an "OC scan" is performed. The OC scan is based on the insight that a failed deciphering in step b) might be due to some frames having been lost so that the current OC does not match the real value. Therefore in step c) the deciphering procedure of step b) is repeated in a loop while altering the OC used until a correct checksum FCS is detected, in which case the successful OC is stored in the data structure as the new OC and the deciphered frame is output.

Since the OC value has 23 bit, looping over all possible OC values would take too long and has actually been found unnecessary. It is sufficient to scan a "window" of OC values in the vicinity of the last stored OC. It has been found that it is most efficient to decrement the OC by one for the first run of the loop and then to successively increment it, starting from the original value, up to a maximum of e.g. OC+8 or OC+16. Therefore, the loop of step c) has preferably a length of 8 runs (OC-1, OC+1, OC+2, OC+3, OC+4, OC+5, OC+6, OC+7) or 16 runs (OC-1, OC+1, OC+2, OC+3, OC+4, OC+5, OC+6, OC+7, OC+8, OC+9, OC+10, OC+11, OC+12, OC+13, OC+14, OC+15).

If neither of the OCs tried in the loop of step c) yields a correct checksum FCS, the process proceeds to step d).

In step d) a "Kc scan" is performed. This means that all Kc values in the roll-over list of the data structure, containing possible authentication triplets, are tried instead of the current Kc in a loop which repeats step b). While looping over the Kcs the OC is kept constant, preferably at the last value retrieved from the data structure. The length of the loop is preferably equal to the length of the roll-over list of stored ciphering keys so that all Kcs of the roll-over list are scanned. Again, if there is a positive FCS check the successful ciphering key is stored (or "marked" in the roll-over list) as the new current Kc.

If there is still no success in deciphering the frame the frame skip counter r in the stored data structure is set to a positive value R, e.g. R = 100, and the deciphering method fails for the current Gb frame. The value R determines the number of subsequent Gb frames belonging to the same IMSI which will not be subjected to the detailed deciphering steps c) and d) in order to save processing time. However, it should be noted that the deciphering step b) is made in any event, i.e. also in the state of skipping when r > 0.

Of course, if processing load is not a critical issue, the mechanism of suppressing steps c) and d) for a number of frames, i.e. the wait loop r=R..0, can be omitted.

The invention is not limited to the exemplary embodiments described in detail herein but encompasses all variants and modifications within the scope of the appended claims.

## Claims

1. A method of deciphering data frames captured on the Gb interface between a mobile station and a serving GPRS support node in a mobile network according to the GPRS standard, the frames being attributable to a mobile station identifier and including an unciphered frame number, an unciphered service identifier, ciphered data and a checksum, comprising the steps of:
continuously capturing ciphering key lists sent to said serving GPRS support node over Gr and Gn interfaces of the network and storing them in a roll-over list per mobile station identifier;
continuously marking the next ciphering key in the roll-over list of a mobile station as current when a key refresh message is captured on the Gb interface;
continuously capturing ciphering input offset values on the Gb interface and storing them per mobile station identifier and service identifier if applicable;
continuously logging frame number overflows in subsequent frames of a mobile station in an overflow counter value per mobile station identifier and service identifier; and
for each frame captured on the Gb interface and attributable to a mobile station identifier performing the steps of:
a) extracting the frame number and service identifier from the frame and retrieving the stored roll-over list, current ciphering key, ciphering input offset value and overflow counter value for said mobile station identifier and service identifier;
b) deciphering the frame on the basis of the retrieved current ciphering key, ciphering input offset value and overflow counter value and the extracted frame number and service identifier and checking the checksum of the deciphered frame and, if correct, outputting the deciphered frame;
c) if the checksum in step b) is not correct: repeating step b) in a loop of predetermined length while altering the overflow counter value used until a correct checksum is detected, in which case the successful overflow counter value is stored and the deciphered frame is output;
d) if the loop in step c) ends without a correct checksum detected: repeating step b) in a loop of predetermined length while successively using ciphering keys from the roll-over list until a correct checksum is detected, in which case the successful ciphering key is marked as current and the deciphered frame is output.

2. The method of claim 1, **characterized in that** if the loop of step d) ends without a correct checksum detected, steps c) and d) are skipped in the deciphering of a predetermined number of subsequent frames of the same mobile station identifier.

3. The method of claim 1 or 2, **characterized in that** in the loop of step c) the overflow counter value is decremented by one for the first run of the loop and successively incremented, starting from its original value, by one for all subsequent runs of the loop.

4. The method of any of the claims 1 to 3, **characterized in that** the length of the loop of step c) is 8 to 16 and the length of the loop of step d) is equal to the length of the roll-over list.

5. An application of the method of any of the claims 1 to 4 in a GPRS network analyzer.

6. A GPRS network analyzer implementing the method of any of the claims 1 to 4.
